# EUROPÄISCHE PATENTSCHRIFT

(11) **EP 2 902 113 B1**
(45) Veröffentlichungstag und Bekanntmachung des Hinweises auf die Patenterteilung: **22.05.2019**
(21) Anmeldenummer: 14153573.2
(22) Anmeldetag: 02.02.2014
(51) Int. Cl.: B05B 5/14, B05B 5/08, B05B 14/48, H01B 13/16, B05D 7/20, B05D 1/12, B05D 3/02

(54) **Verfahren und Vorrichtung zur Beschichtung von elektrischen Leitungen**
Method and device for coating electric leads
Procédé et dispositif d'isolation de lignes électriques

(43) Veröffentlichungstag der Anmeldung: 05.08.2015
(73) Patentinhaber: Lapp Engineering & Co., 6330 Cham (CH)
(72) Erfinder: Kubata, Christof, 6330 Cham (CH); Rehm, Klaus, 2504 Biel (CH); Kalt, Raphael, 2504 Biel (CH)
(74) Vertreter: Rutz & Partner

(56) Entgegenhaltungen:
- US-A- 3 589 332
- US-A- 3 616 983
- US-A- 4 104 416
- US-A- 5 310 582

## Beschreibung

Die Erfindung betrifft ein Verfahren und Vorrichtung zur Beschichtung von elektrischen Leitungen.

Elektrische Leitungen, wie Anschluss-, Steuer- oder Datenleitungen (in der Folge als 'Kabel' bezeichnet) werden z.B. für die Verwendung in Maschinen und elektrischen Geräten mit einer isolierenden Schicht versehen, um Kurzschlüsse und Kriechströme zu vermeiden. Die Anforderungen an die isolierende Schicht variieren hierbei je nach Verwendungszweck und Verwendungsumgebung. Parameter, welche die Wahl des Isolationsmaterials beeinflussen, sind beispielsweise der Spannungs- und Strombereich für den das Kabel ausgelegt ist sowie allfällige Temperatur- und Witterungseinflüsse.

Aufgrund der Anforderungen haben sich Polymer-basierte Isolationsmaterialien, welche durch Extrusion auf die elektrische Leitung aufgebracht werden, in der Praxis durchgesetzt. Ein solches Extrusionsverfahren ist aus der EP1990808 bekannt. Vorteilhaft an der Extrusion sind die relativ hohen Durchlaufgeschwindigkeiten sowie die gute Uniformität der isolierenden Schicht. Nachteilig an diesem Verfahren ist die Begrenzung der minimalen Schichtdicke die erreicht werden kann. Gemäss EP1990808 liegt die minimale Schichtdicke bei ca. 0.1mm wobei dieser Wert in der Praxis aufgrund der schwierigen Prozessbedingungen kaum erreicht wird.

Die Durchschlagsfestigkeit von Polymer-basierten Materialien der Kabelisolation liegt typischerweise bei 20 kV/mm bis 100 kV/mm. Daraus folgt, dass für Kabel, die für Spannungen von weniger als 1kV ausgelegt sind, selbst eine Isolation von deutlich unter 0.1mm ausreichend wäre, ohne dass elektrische Durchschläge auftreten würden. Durch eine Reduktion der Schichtdicke des Kabelmantels könnten Material und Kosten eingespart und höhere Packungsdichten von mehradrigen Kabeln erreicht werden.

Aus der DE102006002192 A1 ist ein Verfahren bekannt, welches erlaubt, einen supraleitfähigen Leiter mit einer Isolationsschicht zu versehen. Das pulverförmige Isolationsmaterial wird zerstäubt und infolge eines auf dem Leiter liegenden elektrischen Potentials an diesem angelagert. Der unter einem elektrischen Potential stehende Leiter wird hierbei horizontal durch die Pulverwolke bewegt, wonach das angelagerte Pulver in einem Ofen eingebrannt wird.

Ein Nachteil bei diesem Verfahren ist das Erfordernis eines hohen elektrischen Potentials, welches auf den Leiter aufgebracht werden muss. Dieses Potential ist nicht räumlich begrenzt sondern erstreckt sich entlang dem Leiter über die gesamte Beschichtungsvorrichtung und stellt somit ein potentielles Sicherheitsrisiko dar.

Ein weiterer Nachteil liegt darin, dass das thermoplastische Pulver nach dem Aufschmelzen nicht gleichmässig um den elektrischen Leiter verteilt ist, sondern eine dickere Schicht auf der Unterseite des Leiters bildet.

Besonders nachteilig ist ferner, dass sich die Vorrichtung innerhalb eines Raumes über eine grosse Distanz erstreckt. Dabei ist nicht nur die Raumnutzung, sondern auch die Nutzung der Medien und der Energie ineffizient, da die Medien und die Energie räumlich verteilt werden.

Die Pulverbeschichtungszone einer Beschichtungsvorrichtung muss generell aufgrund der vorgegebenen Durchlaufgeschwindigkeit und hierbei zu erreichender Schichtdicke dimensioniert werden. Um eine vorgegebene Schichtdicke zu erreichen, ist bei einer hohen Durchlaufgeschwindigkeit der Leitung eine längere Pulverbeschichtungszone erforderlich als bei einer tiefen Durchlaufgeschwindigkeit. Da mit einer hohen Durchlaufgeschwindigkeit der Fertigungsprozess effizienter und kostengünstiger ausgeführt werden kann, wird - unter gleichzeitiger Optimierung der übrigen Parameter - üblicherweise eine möglichst hohe Durchlaufgeschwindigkeit angestrebt. Allerdings ist die Länge der Pulverbeschichtungszone und somit auch die erreichbare Durchlaufgeschwindigkeit oft durch die räumlichen Verhältnisse am Produktionsstandort beschränkt.

Aus der US4104416A ist ein Verfahren zur Herstellung dünnwandiger Überzüge auf länglichen Gegenständen durch elektrostatische Aufbringung von zweiübereinander angeordneten Schichten aus pulverförmigem Material.

Die US3616983 betrifft eine Beschichtungsanlage, in der ein langes metallenes Rohr horizontal durch mehrere Prozessstufen geführt und mit Kunststoff beschichtet wird.

Der vorliegenden Erfindung liegt daher die Aufgabe zugrunde, ein verbessertes Verfahren und eine verbesserte Vorrichtung für die Beschichtung einer elektrischen Leitung zu schaffen. Insbesondere ist ein Verfahren anzugeben, mittels dessen polymerbasierte Materialien in beliebig dünnen Schichten auf eine elektrische Leitung aufgebracht werden können.

Das erfindungsgemässe Verfahren soll es zudem erlauben, elektrische Leitungen unabhängig vom Leitungsquerschnitt gleichmässig zu beschichten, so dass die Leitung mit einer Isolationsschicht versehen wird, die über den gesamten Leitungsumfang eine einheitliche Wanddicke aufweist.

Die erfindungsgemässe Beschichtungsvorrichtung soll die Anwendung des Verfahrens auch bei beschränkten Raumverhältnissen am Produktionsstandort ermöglichen und die erforderlichen Medien und die Energie mit maximaler Effizienz einsetzen. Insbesondere sollen mit dem erfindungsgemässen Verfahren auch möglichst hohe Durchlaufgeschwindigkeiten erreicht werden.

Diese Aufgabe wird mit einem Verfahren und einer Beschichtungsvorrichtung gelöst, welche die in Anspruch 1 bzw. 14 angegebenen Merkmale aufweist. Vorteilhafte Ausgestaltungen der Erfindung sind in weiteren Ansprüchen angegeben.

Das Verfahren und die Beschichtungsvorrichtung dienen der Beschichtung einer elektrischen Leitung, die eine oder mehrere Leitungsadern aufweist, mit einer isolierenden Polymer-basierten Schicht, wobei die elektrische Leitung
a) von einer Abwickeleinheit abgerollt wird,
b) durch wenigstens eine Beschichtungseinheit hindurch geführt und mit Polymerpartikeln beaufschlagt wird,
c) durch wenigstens eine Heizzone einer Heizvorrichtung hindurch geführt wird, und
d) auf eine Aufwickeleinheit aufgerollt wird.

Erfindungsgemäss wird das Verfahren so durchgeführt, dass die elektrische Leitung die Pulverbeschichtungszone in vertikaler Richtung durchläuft. Analog ist die erfindungsgemässe Beschichtungsvorrichtung derart ausgebildet, dass die elektrische Leitung in vertikaler Richtung durch die Pulverbeschichtungszone hindurch geführt wird.

Durch die Durchführung der Leitung in vertikaler Richtung durch die Pulverbeschichtungszone, die sich ebenfalls in vertikaler Richtung erstreckt, werden verschiedene Vorteile erzielt.

Die elektrische Leitung wird stets entlang einer vertikalen Achse präzise geführt und ist somit von den vorzugsweise gleichmässig verteilten Pulversprühdüsen stets gleich beabstandet. Bereits aus diesem Grund wird ein gleichmässigerer Auftrag der Pufferschicht erzielt. Wesentlich ist ferner, dass sich das Pulver aufgrund der Schwerkraft ebenfalls vertikal und somit parallel und aufgrund der kinetischen Energie bei der Abgabe aus der Sprühdüse mit einer radialen Geschwindigkeitskomponente von allen Seiten gleichmässig zur elektrischen Leitung bewegt. Schichten können daher gleichmässig präzise aufgetragen werden, so dass über den gesamten Leitungsumfang identische Eigenschaften der Isolationsschichten erzielt werden.

Da die Beschichtung mit hoher Präzision erfolgt, ist es zudem möglich den Materialauftrag insgesamt zu reduzieren, weshalb gegebenenfalls teures Material eingespart werden kann.

Bei Anwendung des erfindungsgemässen Verfahrens kann am Produktionsstandort zudem die für die Beschichtungsvorrichtung benötigte Grundfläche wesentliche reduziert werden. Insgesamt reduziert sich der Raumbedarf, so dass mehr Raum für andere Fertigungsprozesse zur Verfügung steht. Durch die vertikale Ausrichtung der Pulverbeschichtungszone kann zudem die am Produktionsstandort vorhandene Raumhöhe optimal genutzt werden.

Die vertikale Ausrichtung der Pulverbeschichtungszone führt zu einem kompakteren Aufbau der Beschichtungsvorrichtung, wodurch beispielsweise kostengünstigere Isolationsvorrichtungen realisiert werden können. Ferner können Leitungen für die Medienversorgung kürzer ausgelegt werden. Insgesamt ist mit Energieeinsparungen zu rechnen.

Besonders vorteilhaft ist zudem, dass auf geringerer Grundfläche längere Beschichtungszonen realisiert werden können, so dass die maximale Durchlaufgeschwindigkeit der elektrischen Leitung durch die Beschichtungsvorrichtung wesentlich erhöht werden kann.

Besonders vorteilhaft ist ferner, dass mehrlagige Isolationsschichten anhand des erfindungsgemässen Verfahrens und der erfindungsgemässen Beschichtungsvorrichtung besonders vorteilhaft realisiert werden können, indem die elektrische Leitung mehrfach vertikal durch eine einzige Beschichtungszone oder sequenziellen vertikal durch mehrere parallel zueinander ausgerichtete Beschichtungseinheiten geführt wird. Dabei wird vorzugsweise vorgesehen, dass nach jedem Durchlauf durch eine Beschichtungszone eine Heizzone durchlaufen und die bereits aufgetragene Schicht stabilisiert wird.

Durch die vertikale Ausrichtung der Beschichtungseinheit bzw. der Beschichtungseinheiten kann somit eine Beschichtungsvorrichtung für die Realisierung mehrlagiger Isolationsschichten mit geringem Platzbedarf im Vergleich zu einer Vorrichtung mit horizontaler Ausrichtung der Beschichtungseinheiten erreicht werden.

Die zumindest eine Beschichtungseinheit umfasst mehrere Pulversprühdüsen, über die Polymerpartikel abgeben werden. In vorzugsweisen Ausgestaltungen ist die Beschichtungsvorrichtung mit mehreren Pulversprühdüsen versehen, die entweder in einer Ebene oder vorzugsweise in mehreren übereinander liegenden Ebenen ringförmig um die Förderachse der elektrischen Leitung angeordnet sein. Vorteilhaft ist ferner eine ringförmige Pulversprühdüse verwendbar, welche die elektrische Leitung zumindest teilweise umschliesst.

Die zumindest eine Beschichtungseinheit ist als Schacht oder vorzugsweise Rohr ausgeführt, durch den bzw. das die elektrische Leitung in vertikaler Richtung hindurchgeführt wird. Der Schacht weist vorzugsweise eine zylindrische Form auf. Der Auftrag der Polymerpartikel auf die elektrische Leitung erfolgt innerhalb dieses Schachtes, dessen Durchmesser vorzugsweise zwischen 1cm und 50cm liegt. Aufgrund der vertikalen Führung und das Vermeiden des Durchhängens der elektrischen Leitung kann ein sehr geringer Schachtdurchmesser gewählt werden, der eine effiziente Pulverbeschichtung gewährleistet und Materialverluste entsprechend vermeidet.

In einer weiteren vorzugsweisen Ausgestaltung wird innerhalb der zumindest einen Beschichtungseinheit mittels wenigstens einer Pumpe ein gleichmässiger und kontinuierlicher Luftstrom erzeugt. Vorzugsweise wird der Luftstrom derart gesteuert, dass dessen Geschwindigkeit bzw. die Geschwindigkeit der im Luftstrom geförderten Polymerpartikel etwa der Geschwindigkeit entspricht, mit die elektrische Leitung durch die Beschichtungseinheit geführt wird. In einer bevorzugten Ausführungsform ist das Verhältnis der Durchlaufgeschwindigkeit der elektrischen Leitung zur Geschwindigkeit des Luftstroms im Bereich von 1:10 bis 10:1.

In einer weiteren bevorzugten Ausführungsform ist zwischen der Beschichtungseinheit und der Heizzone eine Absaugeinheit vorgesehen, welche die Ausbreitung der Pulverwolke ausserhalb der Beschichtungseinheit verhindert oder zumindest stark reduziert und eine zu hohe Konzentration der Pulver-/Polymerpartikeln in der Heizzone vermeidet, welche zu einer Pulverexplosion führen könnte. Zudem wird die Anlagerung von Pulverpartikeln auf Komponenten der Vorrichtung ausserhalb der Beschichtungseinheit reduziert, was den Wartungsaufwand vermindert. Die Absaugeinheit, die einen Luftstrom ausstossen oder anziehen kann, kann beispielsweise einen Querstrom oder Gegenstrom mit Luft oder Inertgas, abgeben, durch den die Polymerpartikel abgelenkt oder abgesaugt werden.

Vorzugsweise ist zudem eine Absaug- und Filtervorrichtung vorgesehen, mittels der das Pulver abgesaugt, gefiltert und rezykliert werden kann.

Vorzugsweise wird die elektrische Leitung nach dem Durchlaufen der Beschichtungszone vertikal durch wenigstens eine Heizzone einer Heizvorrichtung geführt, in der die Haftung der auf der elektrischen Leitung angelagerten Polymerpartikel verbessert und die Beschichtung unter Ausschluss von Öffnungen homogen ausgebildet wird. Die Temperatur der Heizzone sowie die Durchlaufzeit sind vorzugsweise entsprechend dem verwendeten Polymermaterial steuerbar.

In vorzugsweisen Ausgestaltungen wird die elektrische Leitung mehrfach durch die gleiche Heizzone oder durch mehrere hintereinanderliegende Heizzonen durchgeführt. Nach dem vertikalen Durchlauf durch die erste Heizzone ist die unverändert gleichmässige Beschichtung stabilisiert, so dass sie über Umlenkrolle geführt werden kann. Besonders vorteilhaft kann die elektrische Leitung induktiv, durch Strahlung oder durch Konvektion erwärmt werden.

In einer weiteren bevorzugten Ausführungsform wird die Anlagerung der Polymerpartikel an der elektrischen Leitung durch eine elektrostatische Potentialdifferenz zwischen diesen beiden Komponenten verbessert. Vorzugsweise werden die Polymerpartikel beim Durchgang durch die zumindest eine Pulversprühdüse mit einem elektrostatischen Potential beaufschlagt und dadurch elektrostatisch geladen. Vorzugsweise wird auch die elektrische Leitung mit einem elektrostatischen Potential beaufschlagt. Wesentlich ist die Potenzialdifferenz zwischen den Polymerpartikeln und der elektrischen Leitung, weshalb die Polymerpartikel oder die elektrische Leitung auch Erdpotential aufweisen kann.

Durch die Potentialdifferenz zwischen den Polymerpartikeln und der elektrischen Leitung werden die Polymerpartikel in Richtung zur elektrischen Leitung beschleunigt.

In einer bevorzugten Ausführungsform wird der Schacht innerhalb der Beschichtungsvorrichtung mit einem weiteren, vom Potential der elektrischen Leitung unabhängig einstellbaren, elektrostatischen Potential beaufschlagt, so dass der Schacht als zusätzliche Elektrode dient, welche die ionisierten Polymerpartikel in Richtung der elektrischen Leitung beschleunigt. Die Polymerpartikel werden daher entlang der Transportphase der elektrischen Leitung konzentriert, so dass die Beschichtung mit hoher Effizienz erfolgt.

Besonders vorteilhaft kann das elektrostatische Potential über Umlenkrollen auf die elektrische Leitung übertragen. Vorzugsweise sind die Umlenkrollen, die aus Metall, Kunststoff oder einer Kombination dieser Materialien gefertigt sind, über Schleifkontakte mit der Potentialquelle verbunden.

In einer weiteren erfindungsgemässen Ausführungsform wird die elektrische Leitung vorzugsweise vertikal durch eine der Beschichtungseinheit vorgeschaltete Vorbearbeitungsstufe durchgeführt. Beim Durchlaufen der Vorbearbeitungsstufe kann die elektrische Leitung mechanisch und/oder chemisch gereinigt werden. Ebenso kann die elektrische Leitung mit einem flüssigen, dampfförmigen oder pulverförmigen Material beschichtet werden, das die Ankopplung der Polymerpartikel an die elektrische Leitung in der Beschichtungseinheit fördert und verbessert. Die genannten Vorprozesse können sequenziell oder in Kombination in einer oder mehreren Vorbearbeitungsstufen durchgeführt werden.

Vorzugsweise umfasst die Beschichtungsvorrichtung eine der Heizvorrichtung nachgeschaltete Kühleinheit, mittels der die auf die elektrische Leitung aufgetragene Beschichtung gekühlt werden kann. Durch das unverzügliche Kühlen der elektrischen Leitung nach Verlassen der Heizzone wird der aufgetragenen Beschichtung Wärmeenergie entzogen und abgeführt, bevor die Wärmeenergie in das innere der elektrischen Leitung eindringen und dortige Komponenten verändern kann. Die Kühlung mittels der Kühleinheit kann durch Abgabe eines gegen die elektrische Leitung gerichteten Strahls eines Gases oder Gasgemisches Luftstrahls oder einer Flüssigkeit erfolgen. Ferner kann die elektrische Leitung durch ein Flüssigkeitsbad oder Dampf geführt werden. Als Materialien sind Luft, Wasser, ein Inertgas, flüssiger Stickstoff sowie Kombinationen davon vorteilhaft einsetzbar.

In einer weiteren bevorzugten Ausführungsform wird die elektrische Leitung nach der Beschichtung durch eine oder mehrere Nachbearbeitungsstufen, insbesondere durch eine Vernetzungseinheit durchgeführt, mittels der die Polymer-basierte Beschichtung vernetzt wird. Dies kann durch Röntgenstrahlung, Elektronenstrahlung oder durch chemische Vernetzung geschehen. Ferner kann eine Nachbearbeitungsstufe vorgesehen werden, mittels der wenigstens eine Funktionsschicht auf die beschichtete elektrische Leitung aufgetragen wird. Vorzugsweise eine oder mehrere Funktionsschichten aufgetragen, mittels der die Widerstandsfähigkeit der elektrischen Leitung gegen mechanische, chemische und/oder thermische Einwirkungen, insbesondere Feuer, erhöht wird.

Mittels des erfindungsgemässen Verfahrens können beliebige Arten von pulverförmigen Polymermaterialien auf die elektrische Leitung aufgetragen werden. Besonders effizient ist die Verwendung von Polymerpartikeln mit einer mittleren Partikelgrösse unter 400pm. Der Schmelzflussindex (gemäss ISO 1133) des Polymermaterials ist zudem vorzugsweise grösser als 2 g/10min.

Um das Risiko einer Pulverexplosion zu reduzieren wird das Verfahren vorzugsweise in einer Atmosphäre mit Inertgas, wie Helium, Neon, Xenon, Argon oder Stickstoff, durchgeführt. Dazu wird erfindungsgemässe Beschichtungsvorrichtung zumindest teilweise innerhalb einer Kammer angeordnet, der das Inertgas zugeführt wird.

Nachfolgend wird die Erfindung anhand von Zeichnungen näher erläutert. Dabei zeigt:
- Fig. 1: eine Schnittdarstellung einer erfindungsgemässen Beschichtungsvorrichtung 1, mittels der eine elektrische Leitung 10 mit Polymerpartikeln 9 beschichtet wird;
- Fig. 2a: den Querschnitt der elektrischen Leitung 10 von Fig. 1, welche in der Beschichtungseinheit 16 mit Pulverpartikeln 9 beschichtet wurde;
- Fig. 2b: den Querschnitt der elektrischen Leitung 10 von Fig. 1 mit ausgehärtetem Kabelmantel 91, der aus der Beschichtung mit Polymerpartikeln 9 resultiert;
- Fig. 2c: den Querschnitt einer nicht nach dem erfindungsgemässen Verfahren gefertigten elektrischen Leitung 10, die einen asymmetrischen Kabelmantel 93 aufweist;
- Fig. 3: die Beschichtungsvorrichtung 1 von Fig. 1 ergänzt mit zusätzlichen Komponenten zur Prozessoptimierung;
- Fig. 4a: die Beschichtungseinheit 16 der Beschichtungsvorrichtung 1 von Fig. 1 in einer vorzugsweisen Ausgestaltung;
- Fig. 4b: einen Schnitt durch die Beschichtungseinheit 16 entlang der in Fig. 4a eingezeichneten Schnittlinie A--A;
- Fig. 5: die Beschichtungsvorrichtung 1 von Fig. 1 in einer weiteren vorzugsweisen Ausgestaltung mit mehreren Umlenkvorrichtungen 14, 15₁, 15₂, 15₃, 15₄, 15₅, 18, mittels denen die elektrische Leitung 10 mehrfach vertikal durch dieselbe Beschichtungseinheit 16 hindurch geführt wird; und
- Fig. 6: die Beschichtungsvorrichtung 1 von Fig. 1 mit zwei Beschichtungseinheiten 16, 16' und zwei Heizvorrichtungen 17, 17', welche von der elektrischen Leitung 10 vertikal ausgerichtet sequentiell durchlaufen werden.

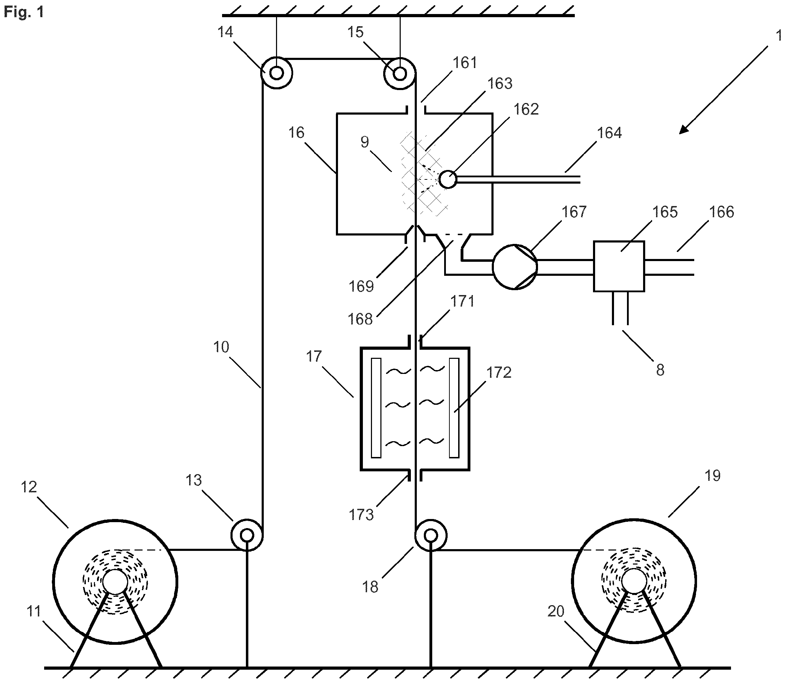

Fig. 1 zeigt eine Schnittdarstellung einer erfindungsgemässen Beschichtungsvorrichtung 1, mittels der eine elektrische Leitung 10 mit Polymerpartikeln 9 beschichtet werden kann. Die elektrische Leitung 10 wird von einer Abwickeleinheit 12 abgerollt, die von einem Ständer 11 drehbar gehalten ist. Über Umlenkrollen 13, 14, 15, 18 wird die elektrische Leitung 10 zu einer Beschichtungseinheit 16 und vertikal durch diese hindurch geführt. Die elektrische Leitung 10 tritt durch eine Eintrittsöffnung 161 in die offen gezeigte Beschichtungseinheit 16 ein und durch eine Austrittsöffnung 169 wieder aus dieser aus. Die Eintrittsöffnung 161 und die Austrittsöffnung 169 sind derart ausgeführt, dass möglichst wenig Pulver aus der Beschichtungseinheit 16 austreten kann, ohne dass die elektrische Leitung 10 - z.B. aufgrund von Vibrationen oder Schwingungen - den Rand der Austrittsöffnung 169 berührt, so dass ein Abrieb der noch nicht verfestigten Leitungsbeschichtung vermieden werden kann.

Die Beschichtungseinheit 16 enthält mehrere Pulversprühköpfe 162 die eine Pulverwolke 163 in der Beschichtungseinheit 16 produzieren und die über eine Pulverleitung 164 mit Pulverpartikeln 9 versorgt werden.

Die Beschichtungseinheit 16 umfasst zudem Komponenten zur Rückgewinnung von überschüssigem Pulver 9. Über einen Rückgewinnungsansaugtrichter 168 ist eine Pumpe 167 mit der Hauptkammer der Beschichtungseinheit 16 verbunden. Durch die Pumpe 167 kann in der Beschichtungseinheit 16 ein Luftstrom oder Gasstrom erzeugt werden, so dass die überschüssigen Pulverpartikel 9 in Richtung des Rückgewinnungsansaugtrichters 168 gelenkt werden. An die Pumpe 167 ist eine Pulverabscheidung 165 angeschlossen, die die Abscheidung der angesaugten Pulverpartikel 9 elf ermöglicht. Die Pulverabscheidung 165 umfasst zumindest Ausgänge für die Abluft 8 sowie für eine Pulverrückgewinnungsleitung 166.

Unmittelbar anschliessend an die Beschichtungseinheit 16 tritt die elektrische Leitung 10 durch die Eintrittsöffnung 171 vertikal in eine Heizvorrichtung 17 ein, in der eine Heizzone vorgesehen ist. Durch die vorteilhafte Anordnung der Heizvorrichtung 17 unmittelbar unterhalb der Beschichtungsvorrichtung 16 wird eine Umlenkung und somit eine Kontaktierung der noch nicht verfestigten Beschichtung der elektrischen Leitung 10 vermieden, die zwischen den Umlenkrollen 15 und 18 vertikal gehalten und in dieser Ausrichtung durch die Beschichtungseinheit 16 und die Heizvorrichtung 17 geführt wird.

Bei der Bemessung der Distanz zwischen der Austrittsöffnung 169 der Beschichtungseinheit 16 und der Eintrittsöffnung 171 der Heizvorrichtung 17 ist zu beachten, dass Polymerpartikel 9 aus der Beschichtungseinheit 16 austreten und sich in der Heizvorrichtung 17 entzünden können, was zu einer Pulverexplosion führen kann. Dieses Risiko wird minimiert, indem die Durchmesser der Austrittsöffnung 169 sowie der Eintrittsöffnung 171 möglichst klein gehalten und vorzugsweise entsprechend dem Durchmesser der elektrischen Leitung 10 gewählt werden. Ferner kann die Austrittsöffnung 169 oder die Eintrittsöffnung 171 mit einem Luftstrahl beaufschlagt werden.

Die Heizvorrichtung 17 umfasst ein Heizelement 172, welches ein beliebiges, aus dem Stand der Technik bekanntes, Heizprinzip verwenden kann.

Nach dem Durchlaufen der Heizzone tritt die elektrische Leitung 10 durch eine Austrittsöffnung 173 aus der Heizvorrichtung 17 aus. Über die Umlenkrolle 18 wird die beschichtete elektrische Leitung 10 einer Aufwickeleinheit 19 zugeführt, von einem Ständer 20 drehbar gehalten ist.

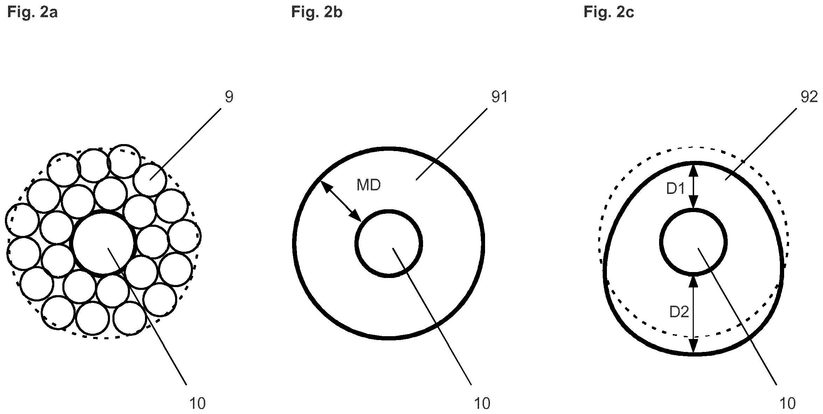

Fig. 2a zeigt einen Querschnitt der elektrischen Leitung 10 von Fig. 1 die nach dem Durchlaufen der Beschichtungseinheit 1. An der elektrischen Leitung 10 sind noch nicht verfestigte Pulverpartikeln 9 angelagert. Die gestrichelte Linie zeigt den Umfang des nach der Verfestigung resultierenden Kabelmantels 91.

Fig. 2b zeigt einen Querschnitt der elektrischen Leitung 10 von Fig. 1 nach dem Durchlaufen der Heizvorrichtung 17 mit dem verfestigten Kabelmantel 91, der symmetrisch ausgebildet ist und über den gesamten Umfang dieselbe radiale Wanddicke MD aufweist.

Fig. 2c zeigt einen Querschnitt einer nicht nach dem erfindungsgemässen Verfahren gefertigten Leitung 10, nach der Pulverbeschichtung einen asymmetrischen Kabelmantel 92 aufweist. Beim horizontalen Durchlauf durch eine Heizzone wurde die noch nicht verfestigte Polymerschicht durch die Gravitationskraft einseitig nach unten gezogen. Die Wanddicke des Kabelmantels variiert zwischen der kleinsten Wanddicke D1 auf der Oberseite der elektrischen Leitung 10 und der grössten Wanddicke Dicke D2 auf der Unterseite der elektrischen Leitung 10. Damit auf der Oberseite der elektrischen Leitung 10 ein vorgegebener Minimalwert der Wanddicke erreicht wird, ist daher das Material zu kompensieren, welches durch die Gravitationskraft verschoben wird das. Einerseits ist daher zusätzliches Material erforderlich, was zusätzlich zu einer Erhöhung des Gewichts der gefertigten Leitung 10 führt. Ferner muss die Leitung innerhalb der Beschichtungszone über eine zusätzliche Distanz geführt werden, innerhalb der das zusätzlich erforderliche Material aufgetragen wird. Erfindungsgemässe Kabel weisen daher bei gleichwertiger Qualität ein geringeres Gewicht und ein geringeres Volumen auf und können mit geringeren Kosten gefertigt werden. Gleichzeitig erfolgt die Fertigung effizienter und mit reduzierten Dimensionen der Beschichtungsvorrichtung 1.

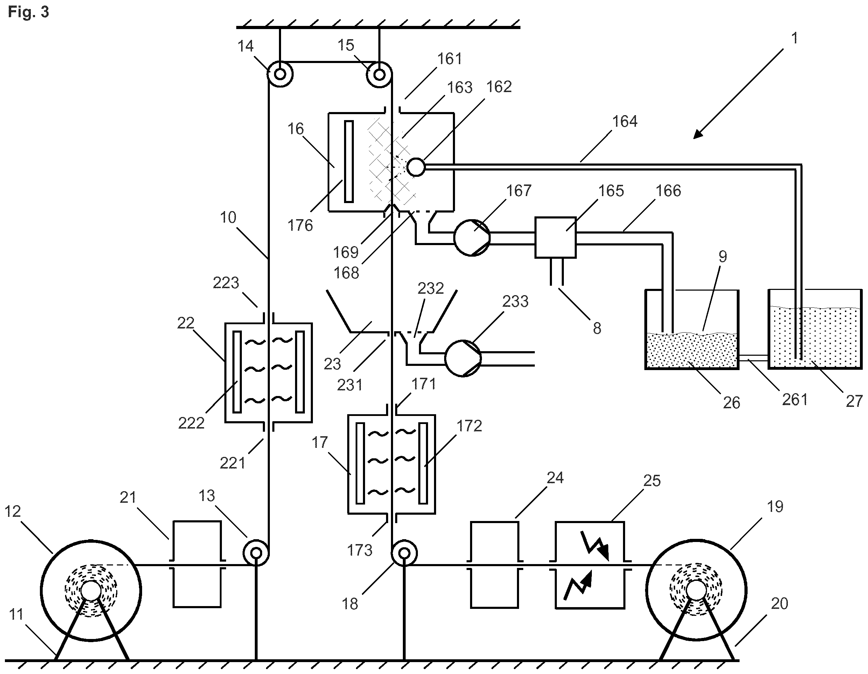

Fig. 3 zeigt die Beschichtungsvorrichtung 1 von Fig. 1 in einer vorzugsweisen Ausgestaltung mit zusätzlichen optionalen Funktionseinheiten.

Nach dem Abwickeln von der Abwickeleinheit 12 durchläuft die elektrische Leitung 10 eine Vorbehandlungseinheit 21, die horizontal oder vertikal durchlaufen werden kann. Hinsichtlich des kompakten Aufbaus der gesamten Beschichtungsvorrichtung 1 werden jedoch auch die optionalen Funktionseinheiten vertikal ausgerichtet.

In der Vorbehandlungseinheit 21 wird die elektrische Leitung 10 für die effiziente und qualitativ hochwertige Beschichtung mit Polymerpartikeln 9 vorbereitet. Vorzugsweise wird eine mechanische und/oder chemische Reinigung der elektrischen Leitung 10 und/oder das Besprühen mit einer chemischen Substanz vorgesehen, welche die Haftfähigkeit der Polymerpartikel 9 an der gereinigten elektrischen Leitung 10 erhöht.

Bevor die elektrische Leitung 10 die Beschichtungszone 16 erreicht, wird sie vorzugsweise in einer Vorheizzone 22 erwärmt, die horizontal oder vertikal durchlaufen werden kann. Durch das Erwärmen der elektrischen Leitung 10 wird innerhalb der Beschichtungseinheit 16 bewirkt, dass die Polymerpartikel 9 beim Anlagern an die elektrische Leitung 10 partiell erwärmt oder geschmolzen werden, wodurch das Anhaften verbessert wird. Die elektrische Leitung 10 tritt durch eine Eintrittsöffnung 221 in die Vorheizzone 22 ein und durch eine Austrittsöffnung 223 wieder aus dieser aus. Die Vorheizzone 22 umfasst ein Heizelement 222, welches auf einer beliebigen Heiztechnik basieren kann. Die Erwärmung der elektrischen Leitung 10 kann durch Induktion, durch Wärmestrahlung oder Konvektion erzielt werden, wofür entsprechende Heizelemente 222, z.B. elektrische Widerstände verwendet werden.

Die Beschichtungseinheit 16 umfasst zusätzlich einen Pulverspeicher 26, welcher mit der Pulverrückgewinnungsleitung 166 verbunden ist. Der Pulverspeicher 26 kann zudem durch weitere Quellen automatisch mit Pulver versorgt werden.

Der Pulverspeicher 26 ist über eine Förderleitung 261 mit einer Fluidisierungseinheit 27 verbunden. Durch die Förderleitung 261 gelangen Polymerpartikel 9 zur Fluidisierungseinheit 27, in der die Polymerpartikel 9 mit Luft, einer Flüssigkeit, oder einem Trägergas zu einem Gemisch verarbeitet werden, welches mit einem gängigen Pulversprühkopf 162 versprüht werden kann. Das Gemisch wird über eine Pulverleitung 164 von der Fluidisierungseinheit 27 zum Pulversprühkopf 162 transportiert.

In einer bevorzugten Ausgestaltung wird innerhalb der Beschichtungseinheit 16 ein Heizelement 176 vorgesehen, mittels dessen das eingespielte Gemisch und die Polymerpartikel 9 erwärmt werden können, so dass beispielsweise Flüssigkeitsanteile des Gemisches verdampft und die Polymerpartikel 9 erwärmt werden. Auf diese Weise gelingt das optimale Einsprühen und Anhaften der Polymerpartikel 9. insbesondere wird eine homogene Pulverwolke 163 erzielt.

Zwischen der Beschichtungseinheit 16 und der Heizvorrichtung 17 ist zudem eine Absaug- und Filtervorrichtung 23 vorgesehen, die eine Durchlassöffnung 231 für die elektrische Leitung 10, zumindest einen Ansaugtrichter 232 sowie zumindest eine Pumpe 233 umfasst. Aufgabe der Absaug- und Filtervorrichtung 23 ist das Ansaugen und die Filtrierung von aus der Beschichtungseinheit 16 austretenden Polymerpartikeln 9, wodurch ein Eintreten von Polymerpartikeln 9 in die Heizvorrichtung 17 verhindert wird.

Nach der Absaug- und Filtervorrichtung 23 durchläuft die elektrische Leitung 10 die Heizvorrichtung 17 und gelangt über die Umlenkrolle 18 zu einer Kühleinheit 24, die horizontal oder vertikal durchlaufen werden kann. Die Kühleinheit 24 kann auch vor der Umlenkrolle 18 direkt an die Heizvorrichtung 17 angeschlossen und vertikal ausgerichtet sein. Die Kühlung kann wahlweise durch aus dem Stand der Technik bekannte Kühlprinzipien durchgeführt werden. Vorzugsweise wird die elektrische Leitung 10 mit einem oder mehreren Wasserstrahlen bespritzt und/oder mit Luft und/oder einem Gas angeblasen.

Nach der Kühleinheit 24 durchläuft die beschichtete elektrische Leitung 10 eine Vernetzungseinheit 25, in der das Polymermaterial des gefertigten Kabelmantels 91 quervernetzt wird. Die Vernetzung erfolgt vorzugsweise durch Bestrahlung mit Elektronen und/oder Röntgenstrahlen oder durch andere aus dem Stand der Technik bekannte Methoden.

Die Leitung 10 wird abschliessend auf die Aufwickeleinheit 19 aufgerollt.

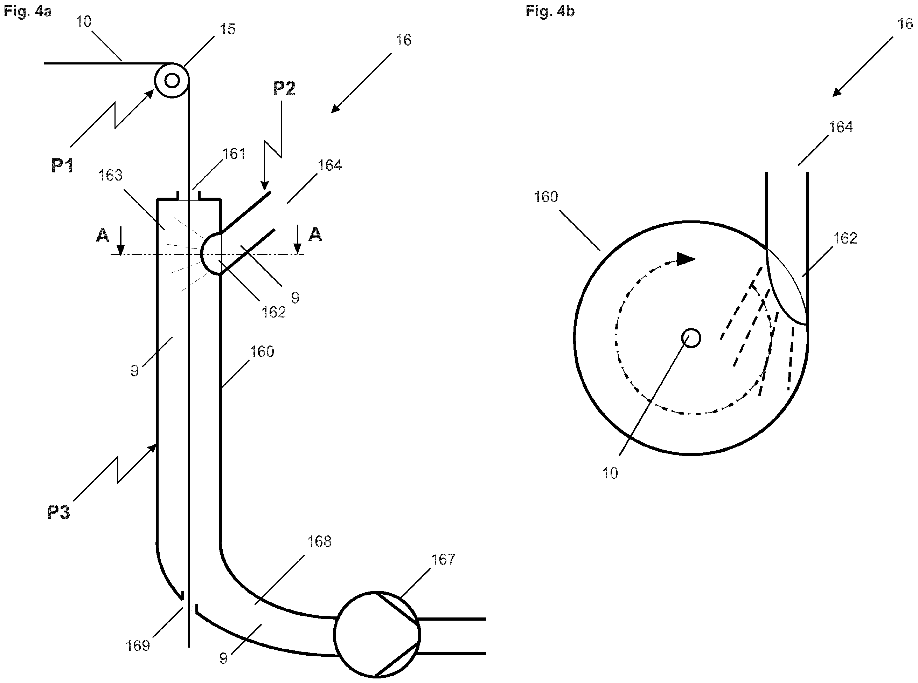

Fig. 4a zeigt die vorzugsweise ausgestaltete Beschichtungseinheit 16 der Beschichtungsvorrichtung 1 von Fig. 1 in einer Schnittdarstellung. Die Beschichtungseinheit 16 hat die Form eines Rohres oder eines Schachts 160. Die elektrische Leitung 10 tritt durch eine Eintrittsöffnung 161 in die Beschichtungseinheit 16 ein und durch eine Austrittsöffnung 169 wieder aus. Der Schnitt durch die Beschichtungseinheit 16 verläuft exakt durch die Eintrittsöffnung 161 und durch die Austrittsöffnung 169. Das Beschichtungsrohr 160 geht im unteren Teil in einem Winkel von rund 90° direkt in den Rückgewinnungsansaugtrichter 168 über und verjüngt sich. Durch eine an das Beschichtungsrohr 160 angeschlossene Pumpe 167 wird ein regelbarer Luftstrom im Inneren des Beschichtungsrohrs 160 erzeugt, welcher die von wenigstens einem Pulversprühkopf 162 abgegebenen Polymerpartikel 9 mit der Geschwindigkeit durch das Beschichtungsrohr 160 treibt, mit der auch die elektrische Leitung 10 durch das Beschichtungsrohr 160 geführt wird. Der Pulversprühkopf 162 wird durch die Pulverleitung 164 mit Polymerpartikeln 9 oder dem beschriebenen Gemisch mit Polymerpartikeln 9 versorgt.

Schematisch ist in Fig. 4a ferner gezeigt, dass an die elektrische Leitung 10 über die Umlenkrolle 15 ein erstes elektrisches Potential P1 angelegt wird. An den Pulversprühkopf 162 oder die Pulverleitung 164 wird ein zweites elektrisches Potential P2 angelegt, welches auf die Polymerpartikel 9 übertragen wird. An das Beschichtungsrohr 160 wird ein drittes elektrisches Potential P3 angelegt, welches die Polymerpartikel 9 radial nach innen treibt. Der Pulversprühkopf 162 und/oder die Pulverleitung 164 sind dabei gegenüber dem Beschichtungsrohr 160 elektrisch isoliert.

Die Potentiale P1, P2 und P3 sind derart gewählt, dass die Polymerpartikel 9 maximal gegen die elektrische Leitung 10 beschleunigt werden und sich im Bereich der Mittelachse des Beschichtungsrohres 160 konzentrieren, wodurch mit minimalem Einsatz von Polymerpraktikum eine optimale Wirkung erzielen lässt. Aufgrund der hohen Effizienz resultiert ein geringer Materialbedarf. Gleichzeitig wird die unerwünschte Ablagerung von Polymermaterial an Vorrichtungsgegenständen weitgehend vermieden.

Fig. 4b zeigt einen Schnitt durch die Beschichtungseinheit 16 entlang der in Fig. 4a eingezeichneten Schnittlinie A--A. In dieser vorzugsweisen Ausgestaltung ist der Pulversprühkopf 162 exzentrisch am Beschichtungsrohr 160 angeordnet, wodurch eine gerichtete Bewegung der Pulverwolke 163 im Inneren des Beschichtungsrohrs 160 erreicht wird, was der strichpunktierte Pfeil veranschaulicht. Die Polymerpartikel 9 werden somit wendelförmig um die elektrische Leitung hindurch geführt und noch deutlich enger an die elektrische Leitung 10 angekoppelt. Die rohrförmige Ausführung der Beschichtungseinheit 16 ermöglicht zudem eine kompakte Bauweise.

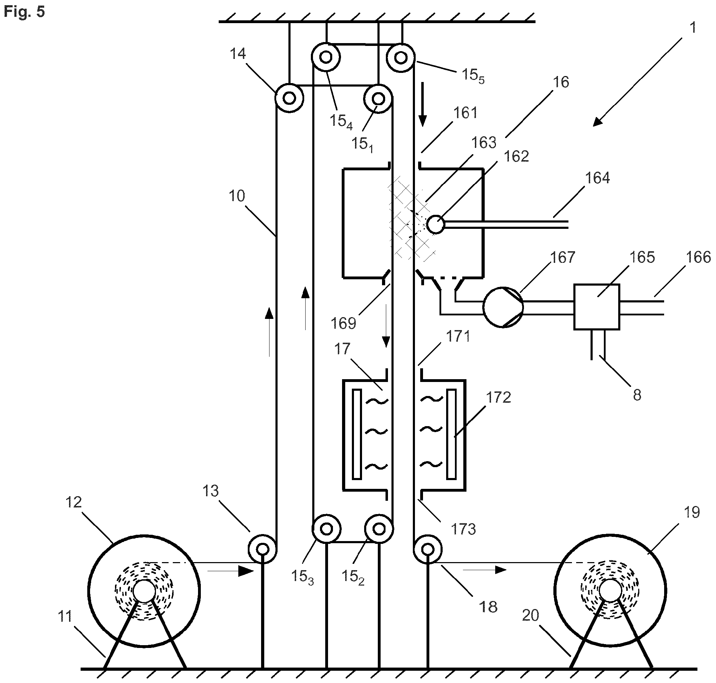

Fig. 5 zeigt die Beschichtungsvorrichtung 1 von Fig. 1 in einer weiteren vorzugsweisen Ausgestaltung mit mehreren Umlenkvorrichtungen 14, 15₁, 15₂, 15₃, 15₄, 15₅, 18, mittels denen die elektrische Leitung 10 mehrfach vertikal durch dieselbe Beschichtungseinheit 16 hindurch geführt wird. Mittels der Umlenkrollen 15₁, 15₂, 15₃, 15₄ und 15₅ wird die elektrische Leitung 10 nach einem ersten vertikalen Durchlauf durch die Beschichtungseinheit 16 und die Heizvorrichtung 17 noch einmal durch diese beiden Einheiten 16, 17 hindurchgeführt. Erfindungsgemäss kann die elektrische Leitung 10 durch weitere Umlenkrollen beliebig oft durch die Beschichtungszone 16 und die Heizvorrichtung 17 durchgeführt werden.

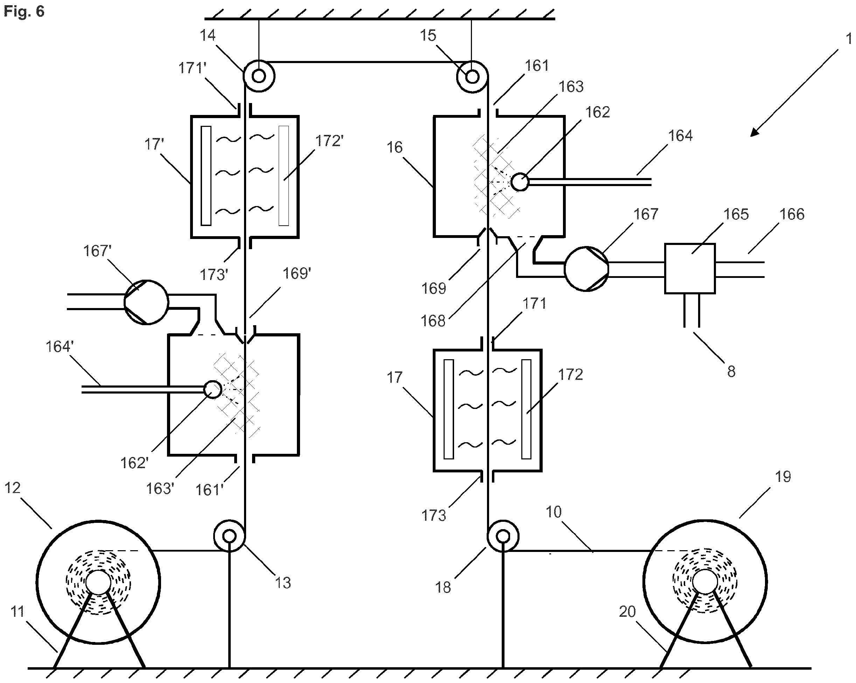

Fig. 6 zeigt eine weitere vorzugsweise Ausgestaltung der Beschichtungsvorrichtung 1 von Fig. 1, die mit einer zusätzlichen Beschichtungseinheit 16' und einer zusätzlichen Heizvorrichtung 17' bestückt wurde. Die zweite Beschichtungseinheit 16' ist analog zur ersten Beschichtungseinheit 16 aufgebaut. Ebenso ist die zweite Heizvorrichtung 17' analog zur ersten Heizvorrichtung 17 aufgebaut. Die Zahl der sequentiell angeordneten Beschichtungseinheiten ist erfindungsgemäss nicht beschränkt.

Fig. 6 zeigt, dass die Beschichtungseinheit 16 bzw. 16' sowohl räumlich unterhalb als auch oberhalb der nachfolgenden Heizvorrichtung 17 bzw. 17' angeordnet werden kann. Der vertikale Durchlauf bleibt gleich.

Die in Fig. 1, Fig. 3, Fig. 5 und Fig. 6 gezeigten Ausgestaltungen der erfindungsgemässen Beschichtungsvorrichtung 1 können wahlweise kombiniert werden. Beispielsweise können zwei Beschichtungseinheiten 16, 16' vorgesehen werden, die von der elektrischen Leitung 10 je mehrmals durchlaufen werden. Ferner können die optionalen Funktionseinheiten wahlweise hinzugefügt werden.

### Bezugszeichenliste

- 1: Vorrichtung zur Beschichtung von elektrischen Leitungen
- 10: elektrische Leitung
- 11: Ständer für Kabelrolle
- 12: Abwickeleinheit
- 13: Umlenkrolle
- 14: Umlenkrolle
- 15: Umlenkrolle
- 15₁ - 15₅: Umlenkrollen
- 16, 16': Beschichtungseinheit
- 160: Beschichtungsrohr
- 161, 161': Eintrittsöffnung
- 162, 162': Pulversprühkopf
- 163, 163': Pulverwolke
- 164, 164': Pulverleitung
- 165: Pulverabscheidung
- 166: Pulverrückgewinnungsleitung
- 167: Pumpe
- 168: Rückgewinnungsansaugtrichter
- 169, 169': Austrittsöffnung
- 17, 17': Heizvorrichtung
- 171, 171': Eintrittsöffnung
- 172, 172': Heizelement
- 173, 173': Austrittsöffnung
- 18: Umlenkrolle
- 19: Aufwickeleinheit
- 20: Ständer für Kabelrolle
- 21: Vorbehandlungseinheit
- 22: Vorheizzone
- 221: Eintrittsöffnung
- 222: Heizelement
- 223: Austrittsöffnung
- 23: Absaug- und Filtervorrichtung
- 231: Durchlassöffnung
- 232: Ansaugtrichter
- 233: Pumpe
- 24: Kühleinheit
- 25: Vernetzungseinheit
- 26: Pulverspeicher
- 261: Förderleitung
- 27: Fluidisierungseinheit
- 8: Abluft
- 9: Pulverpartikel
- 91: Kabelmantel
- 92: Asymmetrischer Kabelmantel
- MD: Dicke des Kabelmantels
- D1: Minimale Dicke des asymmetrischen Kabelmantels
- D2: Maximale Dicke des asymmetrischen Kabelmantels

## Patentansprüche

1. Verfahren zum Beschichten einer elektrischen Leitung (10), die eine oder mehrere Leitungsadern aufweist, mit einer isolierenden Polymer-basierten Schicht in einer Beschichtungsvorrichtung (1), wobei die elektrische Leitung (10)
a) von einer Abwickeleinheit (12) abgerollt wird,
b) durch wenigstens eine Beschichtungseinheit (16) geführt und mit Polymerpartikeln (9) beaufschlagt wird,
c) durch wenigstens eine Heizvorrichtung (17) geführt wird, und
d) auf eine Aufwickeleinheit (19) aufgerollt wird,
wobei die elektrische Leitung (10) in eine vertikale Lage überführt und in vertikaler Ausrichtung durch die Beschichtungseinheit (16) hindurch geführt wird, **dadurch gekennzeichnet, dass** in der Beschichtungseinheit (16) mehrere Pulversprühdüsen (162) vorgesehen sind, die Polymerpartikel (9) abgegeben, und die wenigstens einen vorzugsweise zylinderförmigen Schacht aufweist, durch den die elektrische Leitung (10) hindurch geführt wird und in den die Polymerpartikel (9) eingesprüht werden, wobei der Innendurchmesser des Schachts vorzugsweise in einem Bereich von 1cm bis 50cm liegt.

2. Verfahren nach Anspruch 1, **dadurch gekennzeichnet, dass** die elektrische Leitung (10) einfach oder mehrfach vertikal durch dieselbe Beschichtungseinheit (16) und/oder sequenziell vertikal durch parallel zueinander ausgerichtete Beschichtungseinheiten (16, 16') hindurch geführt wird, wodurch mehrere Schichten übereinander auf die elektrische Leitung (10) aufgetragen werden.

3. Verfahren nach Anspruch 1 oder 2, **dadurch gekennzeichnet, dass** in wenigstens einer der Beschichtungseinheiten (16, 16'), die Pulversprühdüsen (162) in einer oder mehreren übereinander liegenden Ebenen vorzugsweise ringförmig angeordnet und radial zu einer Leitungsachse ausgerichtet sind oder dass wenigstens eine ringförmige Pulversprühdüse (162) vorgesehen ist, welche die elektrische Leitung (10) zumindest teilweise umschliesst und Polymerpartikel (9) abgibt.

4. Verfahren nach einem der Ansprüche 1 - 3, **dadurch gekennzeichnet, dass** anhand wenigstens einer Pumpe (167) ein Luftstrom durch die Beschichtungseinheit (16), gegebenenfalls den wenigstens einen Schacht, geführt wird, dessen Strömungsgeschwindigkeit vorzugsweise derart an die Fördergeschwindigkeit der elektrischen Leitung (10) angepasst wird, dass sich die Polymerpartikel (9) etwa mit der Geschwindigkeit der elektrischen Leitung (10) durch die Beschichtungseinheit (16) bewegen, wobei das Verhältnis der Strömungsgeschwindigkeit und Fördergeschwindigkeit vorzugsweise in einem Bereich zwischen 1:10 und 10:1 liegt.

5. Verfahren (1) nach einem der Ansprüche 1 - 4, **dadurch gekennzeichnet, dass** ausserhalb des Bereichs der Zone, in der Polymerpartikel (9) an die elektrische Leitung (10) angekoppelt werden, vorzugsweise zwischen der Beschichtungseinheit (16) wenigstens ein Medienstrom mit Luft oder Inertgas, wie ein Querstrom oder ein Gegenstrom, vorgesehen wird, durch den die Polymerpartikel (9) abgelenkt oder abgesaugt und vorzugsweise rezykliert werden.

6. Verfahren (1) nach einem der Ansprüche 1 - 5, **dadurch gekennzeichnet, dass** Pulversprühdüsen (162) oder die Polymerpartikel (9) mit einem ersten elektrostatischen Potential, gegebenenfalls Erdpotential, und/oder dass die elektrische Leitung (10) oder Teile davon derart mit einer zweiten elektrostatischen Potential, gegebenenfalls Erdpotential, beaufschlagt werden, dass die Polymerpartikel (9) hin zur elektrischen Leitung (10) beschleunigt werden.

7. Verfahren nach einem der Ansprüche 4 - 6, **dadurch gekennzeichnet, dass** die Polymerpartikel (9) ionisiert werden und/oder dass der Schacht derart mit einem dritten elektrostatischen Potential, gegebenenfalls Erdpotential beaufschlagt wird, dass die Polymerpartikel (9) hin zur elektrischen Leitung (10) beschleunigt werden.

8. Verfahren nach Anspruch 6 oder 7, **dadurch gekennzeichnet, dass** das zweite elektrostatische Potential durch Umlenkrollen (15) aus Metall oder Kunststoff oder eine Kombination dieser Materialien auf die elektrische Leitung (10) übertragen wird, die vorzugsweise über einen Schleifkontakt mit dem zweiten elektrostatischen Potential verbunden sind.

9. Verfahren nach einem der Ansprüche 1 - 8, **dadurch gekennzeichnet, dass** die elektrische Leitung (10) vorzugsweise vertikal durch eine der Beschichtungseinheit (16) vorgeschaltete Vorbearbeitungsstufe (21, 22) hindurch geführt und darin mechanisch und/oder chemisch gereinigt und/oder permanent oder temporär mit einem vorzugsweise flüssigen oder dampfförmigen Material beaufschlagt wird, welches die Ankopplung der Polymerpartikel (9) an die elektrische Leitung (10) begünstigt.

10. Verfahren nach einem der Ansprüche 1 - 9, **dadurch gekennzeichnet, dass** die elektrische Leitung (10) in einer der Heizvorrichtung (17) nachgeschalteten Kühleinheit (24), vorzugsweise durch einen Luftstrahl, einen Wasserstrahl, ein Wasserbad oder durch Stickstoff, gekühlt wird.

11. Verfahren nach einem der Ansprüche 1 - 10, **dadurch gekennzeichnet, dass** die elektrische Leitung (10) nach der Beschichtung mit Polymerpartikeln (9) in einer Vernetzungseinheit (25), vorzugsweise durch Elektronenstrahlung oder Röntgenstrahlung, vernetzt wird und/oder, dass die elektrische Leitung (10) nach der Beschichtung mit Polymerpartikeln (9) in einer Nachbearbeitungsstufe mit wenigstens einer Funktionsschicht versehen wird, welche weitgehend feuerfest ist und/oder gegen mechanische oder chemische Einwirkungen schützt.

12. Verfahren nach einem der Ansprüche 1 - 11, **dadurch gekennzeichnet, dass** der elektrischen Leitung (10) Polymerpartikel (9) mit einem Schmelzflussindex grösser als 2 g/10min und einer mittleren Partikelgrösse kleiner als 400pm zugeführt werden.

13. Verfahren nach einem der Ansprüche 1 - 12, **dadurch gekennzeichnet, dass** zumindest die wenigstens eine Beschichtungseinheit (16) und/oder die wenigstens eine Heizvorrichtung (17) innerhalb einer Kammer mit Inertgas, wie Helium, Neon, Xenon, Argon, oder Stickstoff angeordnet sind.

14. Vorrichtung (1), umfassend eine Abwickeleinheit (12), eine Beschichtungseinheit (16) zum Beaufschlagen mit Polymerpartikeln (9), eine Heizvorrichtung (17) und eine Aufwickeleinheit (19), zum Beschichten einer elektrischen Leitung (10), die eine oder mehrere Leitungsadern aufweist, mit einer isolierenden Polymer-basierten Schicht nach dem Verfahren gemäss einem der Ansprüche 1 - 13;
wobei die elektrische Leitung (10) in eine vertikale Lage überführbar und in vertikaler Ausrichtung durch die Beschichtungseinheit (16) hindurch führbar ist, **dadurch gekennzeichnet, dass** in der Beschichtungseinheit (16) mehrere Pulversprühdüsen (162) vorgesehen sind, die Polymerpartikel (9) abgegeben, und die wenigstens einen vorzugsweise zylinderförmigen Schacht aufweist, durch den die elektrische Leitung (10) hindurch führbar ist und in den die Polymerpartikel (9) einsprühbar sind.

15. Vorrichtung (1) nach Anspruch 14, **dadurch gekennzeichnet, dass** der Innendurchmesser des Schachts in einem Bereich von 1cm bis 50cm liegt.

## Claims

1. A method of coating an electrical lead (10) having one or more lead wires with an insulating polymer-based layer in a coater (1), wherein the electrical lead (10)
a) is unrolled from an unwinding unit (12),
b) is guided through at least one coating unit (16) and charged with polymer particles (9),
c) is guided through at least one heating device (17), and
d) is rolled onto a winding unit (19),
the electrical line (10) being transferred to a vertical position and guided in vertical alignment through the coating unit (16) **characterized in that** in the coating unit (16) a plurality of powder spray nozzles (162) are provided, which discharge the polymer particles (9), and that the coating unit (16) has at least one preferably cylindrical shaft through which the electrical line (10) is passed and in which the polymer particles (9) are sprayed, wherein the inner diameter of the shaft is preferably in the range of 1cm to 50cm.

2. Method according to claim 1, **characterized in that** the electrical line (10) is guided simply or multiply vertically through the same coating unit (16) and / or sequentially vertically through parallel aligned coating units (16, 16 '), whereby several layers on top of each other the electrical line (10) are applied.

3. Method according to claim 1 or 2, **characterized in that** the coating unit (16) has at least one preferably cylindrical shaft through which the electrical line (10) is passed and in which the polymer particles (9) are sprayed, wherein the inner diameter of the shaft is preferably in a range of 1cm to 50cm.

4. Method according to one of the claims 1 - 3, **characterized in that** based on at least one pump (167) an air flow through the coating unit (16), optionally the at least one shaft is guided, the flow rate preferably in such a way to the conveying speed of the electrical line (10), that the polymer particles (9) move through the coating unit (16) at approximately the speed of the electrical line (10), wherein the ratio of the flow velocity and conveying speed is preferably in a range between 1:10 and 10: 1.

5. Method according to one of the claims 1 - 4, **characterized in that** outside the region of the zone in which polymer particles (9) are coupled to the electrical line (10), preferably between the coating unit (16) at least one media stream with air or inert gas, such as a cross flow or a countercurrent, is provided, through which the polymer particles (9) are deflected or sucked off and preferably recycled.

6. Method according to one of the claims 1 - 5, **characterized in that** powder spray nozzles (162) or the polymer particles (9) with a first electrostatic potential, possibly ground potential, and / or that the electrical line (10) or parts thereof with such a second electrostatic potential, optionally ground potential, are applied, that the polymer particles (9) are accelerated towards the electrical line (10).

7. Method according to one of the claims 4 - 6, **characterized in that** the polymer particles (9) are ionized and / or that the shaft is so applied to a third electrostatic potential, optionally ground potential, that the polymer particles (9) towards the electrical line (10) are accelerated.

8. Method according to one of the claims 6 or 7, **characterized in that** the second electrostatic potential is transmitted by deflection rollers (15) made of metal or plastic or a combination of these materials on the electrical line (10), which preferably connected via a sliding contact with the second electrostatic potential are.

9. Method according to one of the claims 1 - 8, **characterized in that** the electrical line (10) preferably vertically through one of the coating unit (16) upstream pre-processing stage (21, 22) passed therethrough and mechanically and / or chemically cleaned and / or permanent or is temporarily subjected to a preferably liquid or vaporous material, which favours the coupling of the polymer particles (9) to the electrical line (10).

10. Method according to one of the claims 1 - 9, **characterized in that** the electrical line (10) in one of the heating device (17) downstream cooling unit (24), preferably by an air jet, a water jet, a water bath or nitrogen, is cooled.

11. Method according to one of the claims 1 - 10, **characterized in that** the electrical line (10) is crosslinked after coating with polymer particles (9) in a crosslinking unit (25), preferably by electron beam or X-radiation, and / or that the electrical line (10) after coating with polymer particles (9) is provided in a post-processing stage with at least one functional layer which is largely refractory and / or protects against mechanical or chemical effects.

12. Method according to one of the claims 1 - 11, **characterized in that** at least the at least one coating unit (16) and / or the at least one heating device (17) within a chamber with inert gas, such as helium, neon, xenon, argon, or nitrogen are arranged

13. Method according to one of the claims 1 - 12, **characterized in that** zumindest die wenigstens eine Beschichtungseinheit (16) und/oder die wenigstens eine Heizvorrichtung (17) innerhalb einer Kammer mit Inertgas, wie Helium, Neon, Xenon, Argon, oder Stickstoff angeordnet sind.

14. Device (1), comprising an unwinding unit (12), a coating unit (16) for coating polymer particles (9), a heating unit (17) and a winding unit (19), for coating an electric line (10), that comprises one or several electric conductors, with an insulating polymer-based sheet according to a method according to one of the claims 1 - 13, **characterized in that** several powder nozzles (162) are provided in the coating unit (16), that discharge polymer particles (9), and that comprises at least one preferably cylindrical shaft, through which the electric line (10) is guidable, and into which the polymer particles (9) are sprayable.

15. Device (1) according to claim 14, **characterized in that** the inner diameter of the shaft is 1cm and 50cm.

## Revendications

1. Procédé de revêtement d'un conducteur électrique (10) comportant un ou plusieurs fils conducteurs avec une couche isolante à base de polymère dans un enduit (1), le conducteur électrique (10) étant
a) déroulé depuis une unité de déroulement (12),
b) guidé à travers au moins une unité de revêtement (16) et chargé en particules de polymère (9),
c) guidé à travers au moins un dispositif de chauffage (17), et
d) enroulé sur une unité d'enroulement (19),
la ligne électrique (10) étant transféré dans une position verticale et guidé dans un alignement vertical à travers l'unité de revêtement (16). **caractérisé en ce que** dans au moins l'une des unités de revêtement (16, 16 '), une pluralité de buses de pulvérisation de poudre (162) sont prévues, qui émettent des particules de polymères (9), et que l'unité de revêtement (16) présente au moins un puits de préférence cylindrique par lequel passe la ligne électrique (10) et dans lequel sont pulvérisées les particules de polymère (9), dans lequel le diamètre intérieur de la tige est de préférence dans une intervalle de 1 cm à 50 cm.

2. Procédé selon la revendication 1, **caractérisé en ce que** la ligne électrique (10) est guidée simplement ou se multiplie verticalement à travers la même unité de revêtement (16) et / ou de manière séquentielle verticale à travers des unités de revêtement alignées parallèlement (16, 16 '), plusieurs couches superposées les lignes électriques (10) sont appliquées.

3. Procédé selon la revendication 1 ou 2, **caractérisé en ce que** dans au moins l'une des unités de revêtement (16, 16 '), une pluralité de buses de pulvérisation de poudre (162) sont prévues, les particules de polymère (9) étant déchargées et disposées dans un ou plusieurs plans superposés de préférence annulaires et sont alignés radialement par rapport à un axe de ligne ou qu'au moins un buses de pulvérisation de poudre (162) annulaire soit prévu, lequel entoure au moins partiellement la ligne électrique (10) et les particules de polymère (9) sont émises.

4. Procédé selon une des revendications 1 - 3, **caractérisé en ce que** sur la base d'au moins une pompe (167), un flux d'air traverse l'unité de revêtement (16), éventuellement le ou les arbres sont guidés, le débit étant de préférence proportionnel à la vitesse de transport de la ligne électrique (10).), que les particules de polymère (9) se déplacent à travers l'unité de revêtement (16) à peu près à la vitesse de la ligne électrique (10), le rapport de la vitesse d'écoulement et de la vitesse de transport se situant de préférence dans la plage allant de 1:10 à 10: 1.

5. Procédé selon une des revendications 1 - 4, **caractérisé en ce qu'**en dehors de la zone de la zone dans laquelle les particules de polymère (9) sont couplées à la ligne électrique (10), de préférence entre l'unité de revêtement (16) et au moins un flux de fluide avec de l'air. ou est fourni un gaz inerte, tel qu'un écoulement transversal ou un contre-courant, à travers lequel les particules de polymère (9) sont déviées ou aspirées et de préférence recyclées.

6. Procédé selon une des revendications 1 - 5, **caractérisé en ce que** des buses de pulvérisation de poudre (162) ou les particules de polymère (9) ayant un premier potentiel électrostatique, éventuellement le potentiel de la masse, et / ou que la ligne électrique (10) ou des parties de celles-ci avec un tel un deuxième potentiel électrostatique, éventuellement le potentiel de la masse, est appliqué pour que les particules de polymère (9) soient accélérées vers la ligne électrique (10).

7. Procédé selon une des revendications 4 - 6, **caractérisé en ce que** les particules de polymère (9) sont ionisées et / ou que au puits est appliqué à un troisième potentiel électrostatique, éventuellement potentiel de masse, de sorte que les particules de polymère (9) sont accélérés et dirigées vers la ligne électrique (10).

8. Procédé selon une des revendications 6 ou 7, **caractérisé en ce que** le second potentiel électrostatique est transmis par des rouleaux de renvoi (15) en métal ou en plastique ou par une combinaison de ces matériaux sur la ligne électrique (10), qui est de préférence reliée par un contact glissant au second potentiel électrostatique.

9. Procédé selon une des revendications 1 - 8, **caractérisé en ce que** la ligne électrique (10) passe de préférence verticalement à travers l'un de l'étage de prétraitement (16) en amont (16) traversé et est nettoyé mécaniquement et / ou chimiquement et / ou de manière permanente ou est temporairement soumis à un matériau de préférence liquide ou vaporeux, ce qui favorise le couplage des particules de polymère (9) à la ligne électrique (10).

10. Procédé selon une des revendications 1 - 9, **caractérisé en ce que** la ligne électrique (10) est refroidie dans l'un des dispositifs de chauffage (17) de refroidissement (24), de préférence par jet d'air, jet d'eau, bain-marie ou azote.

11. Procédé selon une des revendications 1 - 10, **caractérisé en ce que** la ligne électrique (10) est réticulée après revêtement avec des particules de polymère (9) dans une unité de réticulation (25), de préférence par faisceau d'électrons ou par rayonnement X, et / ou que la ligne électrique (10) après revêtement avec des particules de polymère (9), on prévoit, dans une étape de post-traitement, au moins une couche fonctionnelle largement réfractaire et / ou protégeant contre les effets mécaniques ou chimiques.

12. Procédé selon une des revendications 1 - 11, **caractérisé en ce que** l'on alimente la ligne électrique (10) en particules de polymère (9) ayant un indice de fluidité à chaud supérieur à 2 g / 10min et une taille moyenne inférieure à 400 µm.

13. Procédé selon une des revendications 1 - 12, **caractérisé en ce qu'**au moins une au moins une unité de revêtement (16) et / ou au moins un dispositif de chauffage (17) sont disposés dans une chambre contenant un gaz inerte tel que l'hélium, le néon, le xénon, l'argon ou l'azote.

14. Dispositif (1), comprenant une unité de déroulement (12), une unité de revêtement (16) pour appliquer des particules de polymères (9),un dispositf de chauffage (17) et une unité de roulement (19), pour revêter une ligne électrique (10), qui comprend un ou plusieurs conducteurs électriques, avec une couche isolante à base de polymères selon un procédé selon une des revendications 1 - 13, **caractérisé en ce que** dans l'unité de revêtement (16) plusieurs buses de pulvérisation (162) sont prévus, qui émettent des particules polymères (9), et qui présentent au moins un puits de préférence cylindrique, à travers lequel la ligne électrique (10) peut être menée à travers et dans lequel des particules polymères (9) peuvent être sprayées.

15. Dispositif (1) selon la revendication 14, **caractérisé en ce que** le diamètre intérieur du puits est de préférence entre 1 cm et 50 cm.
